# EUROPEAN PATENT SPECIFICATION

(11) **EP 2 086 447 B1**
(45) Date of publication and mention of the grant of the patent: **24.08.2016**
(21) Application number: 07848162.9
(22) Date of filing: 21.11.2007
(51) Int. Cl.: A61C 1/08, A61G 15/16

(54) **ARRANGEMENT FOR ADJUSTING THE BENDING RESISTANCE OF AN INSTRUMENT ARM**
ANORDNUNG ZUR EINSTELLUNG DES BIEGEWIDERSTANDS EINES INSTRUMENTENARMS
DISPOSITIF DE RÉGLAGE DE LA RÉSISTANCE À LA FLEXION D'UN BRAS D'INSTRUMENT

(30) Priority: 21.11.2006 FI 20065738
(43) Date of publication of application: 12.08.2009
(73) Proprietor: PLANMECA OY, 00880 Helsinki (FI)
(72) Inventor: HUOTARI, Arto, 00940 Helsinki (FI); FRÖJDMAN, Jan, 01150 Söderkulla (FI)
(74) Representative: Winter, Brandl, Fürniss, Hübner, Röss, Kaiser, Polte - Partnerschaft mbB
(86) International application number: PCT/FI2007/050629
(87) International publication number: WO 2008/062101

(56) References cited:
- EP-A1- 0 202 476
- EP-A1- 0 202 476
- JP-A- 2002 291 818
- JP-A- 2003 010 208
- US-A- 3 740 852
- US-A- 4 889 488
- US-A- 4 889 488

## Description

The present invention concerns an arrangement as defined in the preamble of claim 1 for adjusting the bending resistance of an instrument arm arranged in connection with a dental care unit.

The present invention relates to the adjustment of the bending resistance of bendable instrument arms, or instrument arms arranged to be bent, intended for use in a dental care unit to support hand instruments. As is known, hand instruments, such as e.g. dentist's drills and instruments designed for the treatment of teeth and dental fillings or for the curing of dental filling material, are connected to the dental care unit via instrument hoses. Through these hoses, the hand instruments are supplied e.g. with operating power, such as electricity or compressed air, from the dental care unit. Hand instruments are typically placed on an instrument console provided in connection with the dental care unit and connected to the dental care unit by a movable arm. Thus, the user of the instruments can easily move the console together with the instruments as necessary to a suitable position and, during a treatment operation, take the required instrument from the console to the point of application without having to move the instrument but through short distances.

To keep the instrument hoses out of the way of the person using the instruments and to allow the instruments to be used without their weight straining the user and interfering with their use, a typical solution is to provide in conjunction with the dental care unit upwards oriented instrument arms attached to the instrument console, on which arms the instrument hoses are placed for support. Such an arrangement improves the ergonomics of use of the instruments, especially in situations involving use of an instrument for longish periods at a time. On the other hand, providing a support for the hoses makes it possible e.g. to position the instrument console and therefore the instruments in an ergonomically optimal position above a patient lowered into a lying position.

A prior-art instrument arm solution is disclosed in European patent specification no. EP0820752. Fig. 1 of this specification presents an instrument console for a dental care unit which has five storing places for storing hand instruments and, aligned with them, five instrument arms extending in an oblique upward direction. An instrument hose is connected to the hand instrument by the first end of the hose. The hose is arranged to pass around a support organ at the free upper end of the instrument arm while its other end is attached to the instrument console. When the user picks up the instrument from the console, the instrument arm bends as needed so that the hose will extend to the point of application of the instrument. When the instrument is placed back on the console, the instrument arm straightens to its initial position again and keeps the hose tight and thus out of the way for other actions.

The US patent specification 4,889,488 discloses a bendable instrument arm arranged with two pivot points so that the trajectory of the distal end of the arm will not reach such heights during use of an instrument as in the case of prior art solutions.

The hand instruments used in dental care are typically of different weights. On the other hand, the instrument arms and hoses in each dental care unit are typically of identical design, and therefore in themselves they always produce the same counter force tending to prevent bending. Correspondingly, identical instrument arms also always tend to restore the straight shape of the instrument arm with the same force. In practice, however, this is not the situation because the instruments are of different weights, and consequently e.g. for the bending of the separate instrument arms a manually produced force of different magnitude depending on the weight of the instrument is required in each case. When the instruments are being used, the above-mentioned counter force is also felt to be different in each case according to the weight of the instrument in question.

To allow instruments to be removed from the console and used as easily as possible, regardless of their weight, it should be possible to adjust the removal resistance of the instrument arm according to the weight of the instrument. Different users may also have personal preferences and routines in the use of instruments. In prior art, however, no particularly easy-to-use and simple solutions for instrument-specific adjustment of the bending resistance, especially of the removal resistance of an instrument arm are known.

In this context, removal resistance means the force required for the instrument arm to start bending when it is being moved from the console towards the point of application. One of the factors affecting the magnitude of the force required is the angle of withdrawal of the instrument relative to the arm, which extends e.g. obliquely upwards. If the instrument is withdrawn e.g. in a down-ward direction relative to the horizontal plane, a greater force is needed than for withdrawing it horizontally. The removal resistance must not be too high because in that case the arm would exert an excessive pull on the instrument and hamper the use and/or employment of the instrument. Correspondingly, if the removal resistance is too low in relation to the weight of the (heaviest) instrument, this may lead to problems as to whether the instrument will stay on the instrument table.

The object of the present invention is to provide a new type of solution relating to the above-discussed problem and to create a simple and economical arrangement for adjusting the bending resistance of a bendable instrument arm, or an instrument arm arranged to be bent, used in a dental care unit. Bendable arm in this context refers to e.g. an arm which in its rest position is essentially elongated, preferably straight, and arranged to be bendable in one direction e.g. substantially at its midpoint. An arm arranged to be bent may comprise a spring or a corresponding construction, which may also be arranged substantially in connection with the fastening structure of the arm and instrument console. The arrangement of the invention is characterized by what is presented in the characterizing part of claim 1. Other embodiments of the invention are correspondingly characterized by what is disclosed in the other claims.

The arrangement of the invention has the advantage that especially the removal resistance of the instrument arm can be easily adjusted, allowing the resistance of each instrument arm to be adjusted separately by each user to a desired magnitude. Thus, the removal resistance of e.g. heavier instruments can be easily adjusted to a somewhat greater magnitude. A further advantage is that the arrangement is simple, reliable in operation and economical to implement.

In the following, the invention will be described in greater detail by referring to a few of its preferred embodiment examples and the attached drawings, wherein
- Fig. 1: presents an oblique side view of a dental care unit in which the adjustment arrangement of the invention can be applied,
- Fig. 2: presents a side view of an adjustment arrangement according to the invention for use at the end of an instrument arm,
- Figs. 3a-3c: present simplified side views of a hose support arranged at the end of an instrument arm and shown in different positions,
- Fig. 4: presents an oblique top view of an adjustment arrangement according to the invention, showing the various parts of the arrangement separately.

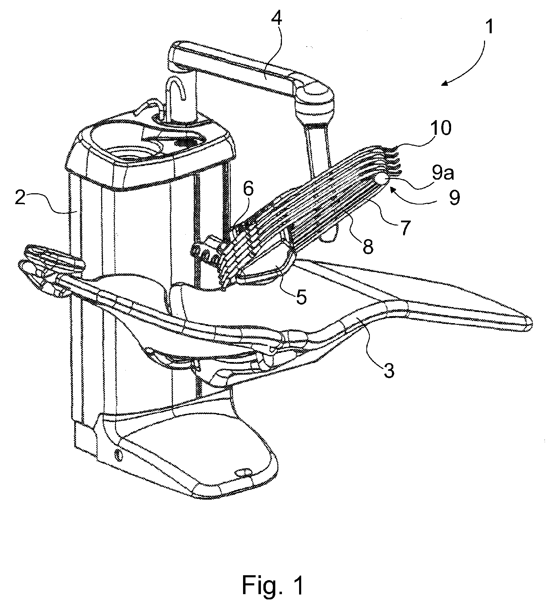

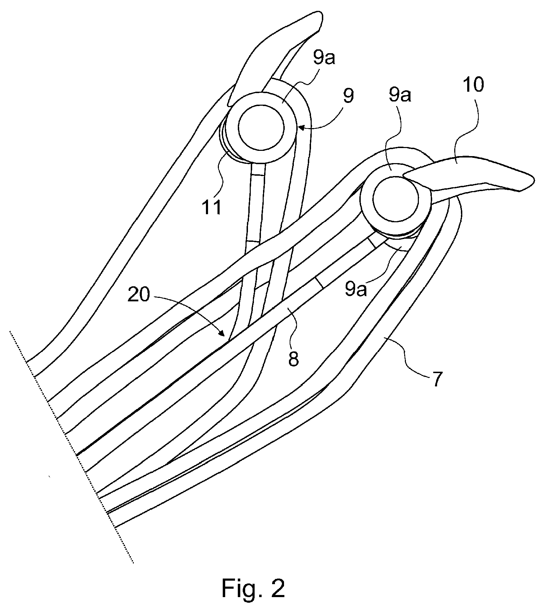

Fig. 1 presents an oblique side view of a dental care unit applying the invention. The dental care unit 1 according to the invention comprises a body part 2, a treatment chair 3, a console arm 4 connected by its first end to the body part 2, and an instrument console 5 attached to the second end of the arm 4, said console in this case carrying four hand instruments 6, such as e.g. dental drills or other hand instruments used in dental care, provided with instrument hoses 7 or equivalent. Attached to the instrument console 5 is one instrument arm 8 for each instrument 6. The instrument arms 8 are fastened by their first ends to the rear part of the console 5 and fitted to extend obliquely upwards and backwards from the console 5. Fitted on the second end, i.e. the free end, of each instrument arm 8 is a hose support 9 in a manner explained in more detail in connection with the next Fig. 2, and a support loop 10 holding the instrument hose 7 on the hose support 9. The hose support 9 may comprise e.g. a disc-like or wheel-like support organ 9a with a substantially circular rim to support the hose 7.

The instrument hose 7 is connected to the hand instrument 6 in such manner that the first end of the hose 7 is attached to the rear end of the instrument 6, from where it is passed to the second end of the instrument arm 8 and arranged to pass around the hose support 9 provided there and through the support loop 10. The second end of the instrument hose 7 is connected to the rear part of the instrument console 5. Thus, the hand instruments 6 are connected to the body part 2 of the dental care unit 1 via the instrument hoses 7 and the console arm 4, and the required physical quantities for operating the instruments can be supplied to them from the dental care unit 1.

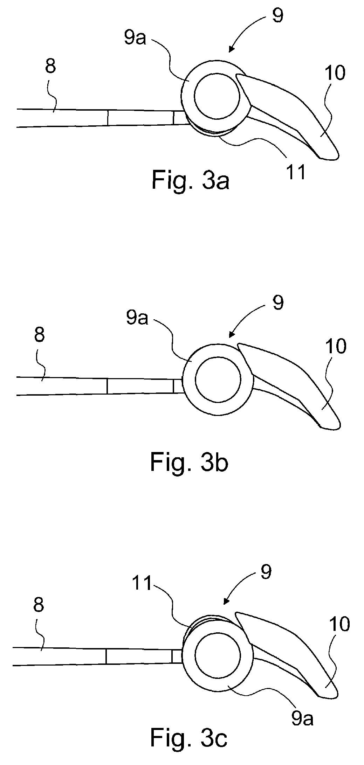

Figs. 2 and 3a-3c present an arrangement according to the invention in lateral view. Fig. 2 shows the upper ends of three instrument arms 8 with support organs 9a and support loops 10 fitted on them. The instrument hoses 7 are arranged to pass through the support loops 10 and around the support organs 9a, and the instrument arms 8 to be oriented in an oblique upward direction away from the user. Each instrument arm 8 has a point or region 20 where the arm 8 is to be bent and at least the upper end, i.e, the aforesaid second end of the arm 8 begins to rise when the user begins to withdraw the hand instrument 6 from the instrument console 5 towards the working point. The bending region 20 of the arm 8 may be located e.g. substantially in the middle part of the arm relative to the longitudinal direction of the instrument arm 8, or the arm 8 may be arranged to be bendably attached by its lower end to the instrument console 5.

In Fig. 2, the middlemost instrument arm 8 as seen in the depthwise direction of the figure has been bent upwards, corresponding to a situation where a hand instrument has been removed from the instrument console 5 and moved in a direction away from the console. According to the idea of the invention, the position of the instrument hose, i.e. the position of the support organ 9a in the embodiment according to Figs. 2 and 3a-3c, has been adapted to be varied with respect to the instrument arm 8. If we consider the support arm 8 in a horizontal orientation as shown in Figs. 3a-3c, the support organ 9a at the end of the instrument arm 8 can, according to the invention, be moved upwards or downwards or, more generally speaking, closer to or farther away from the instrument arm 8, whereby, depending on the embodiment, the position of the supporting point or supporting surface in the support organ 9a of the instrument hose 7 and/or the position of the axle of the support organ in relation to the instrument arm 8 is changed. As the instrument arm 8 can in principle also be implemented as an arm adjustable e.g. in shape and/or length, the general idea of the invention relates to a solution in which the position of the point of support of the hose with respect to the point of support and/or fulcrum of the instrument arm 8 is arranged to be adjustable. This adjustment is preferably implemented by arranging the hose support to be adjusted to positions closer to and farther away from the instrument arm while its free end, i.e. the arm, is arranged to be directed essentially upwards in the direction of the bending or turning movement of the upper end of the instrument arm.

In Fig. 2, the support organ 9a of the nearest instrument arm 8, and thus also the supporting point of the hose 7, has been adjusted to a substantially high position with respect to the instrument arm 8. Correspondingly, the support organ 9a of the middlemost instrument arm 8 has been adjusted substantially to a middle position with respect to the instrument arm 8, and the support organ 9a of the farthest instrument arm 8 has been adjusted to a substantially low position with respect to the instrument arm 8. The removal resistance of the instrument arm 8 can thus be adjusted by varying the distance of the support organ 9a forming the supporting point of the instrument hose 7 from the longitudinal central axis of the instrument arm 8.

In Figs. 3a-3c, the position of the hose support 9 relative to the instrument arm 8 is shown in a simplified manner and, for the sake of clarity, without the instrument hose 7. In Fig. 3a, the hose support 9 is in its highest possible position and farthest away from the instrument arm 8, in which situation the bending resistance of the instrument arm 8 is as low as possible. Correspondingly, in Fig. 3b the hose support 9 is in the middle position of its adjustment range, and in Fig. 3c in the lowest position, in which situation the removal resistance is at a maximum. The hose support 9 may also be adjustable to more than the three different positions illustrated in Figs. 3a-3c.

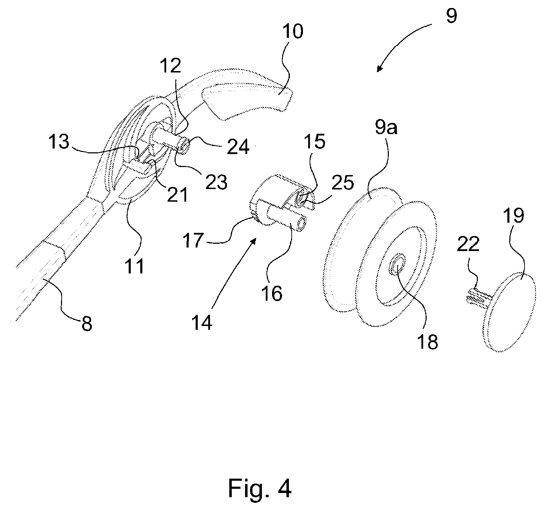

Fig. 4 presents an oblique top view of an adjustable hose holder arrangement 9 according to a preferred embodiment of the invention with its different parts shown separately from each other. In the solution according to Fig. 4, the instrument arm 8 is provided with a substantially circular supporting part 11 arranged at the upper end of the instrument arm 8 and forming a support surface in a substantially vertical plane. The supporting part 11 comprises a fixedly disposed eccentric trunnion 12 extending outwards from the support surface substantially perpendicularly from the longitudinal central axis of the instrument arm 8, a locking stopper 13 arranged in connection with the supporting part 11 and directed towards the eccentric trunnion 12, and a stop face 21 located level with the locking stopper 13 at a horizontal distance from the locking stopper 13. Attached to the supporting part 11, on the opposite side relative to the instrument arm 8, is a support loop 10 through which the instrument hose 7 is arranged to be passed. The support loop 10 prevents the instrument hose 7 from escaping from around the support organ 9a.

The free end of the eccentric trunnion 12 is provided with a slit 24 disposed along the central axis of the eccentric trunnion 12 and extending towards the base of the eccentric trunnion 12, said slit being adapted to permit the free end of the eccentric trunnion 12 to be restorably compressed into a smaller shape. In addition, the free end of the eccentric trunnion 12 is provided with a substantially annular motion limiter 23 having a size larger than the diameter of the eccentric trunnion and forming a shoulder, with cut-off gaps in the region of the slit 24 and with a beveled edge on the side facing towards the base of the eccentric trunnion 12. The adjustment arrangement additionally comprises an adjusting organ 14 provided with a gudgeon hole 15 fittable onto the eccentric trunnion 12 and having an annular expansion 25, a hollow pivot journal 16 functioning as the axle of rotation of the support organ 9a, and a toothing made in the outer edge of the adjusting organ 14 and functioning as a locking element 17. The support organ 9a, which in its present embodiment is a wheel having a groove extending along its circumferential surface and adapted for the instrument hose 7, has a hollow boss 18 fittable onto the pivot journal 16 provided in the adjusting organ 14. In addition, the arrangement comprises a locking piece 19 provided with a locking claw 22 and adapted to be inserted into the boss 18 of the support organ 9a and the hollow pivot journal 16 of the adjusting organ 14 to lock the support organ 9a and the adjusting organ 14 to each other in the axial direction of the support organ 9a.

The hose holder according to Fig. 4 has been arranged to be assembled e.g. by first pushing the adjusting organ 14 into position on the eccentric trunnion 12. The adjusting organ 14 is so shaped and dimensioned that in a certain orientation it can pass by the stop face 21 and thus reach its right place, whereupon it can be turned to an appropriate orientation. When the adjusting organ 14 is pushed into place, the gudgeon hole 15 of the adjusting organ causes via the motion limiter 23 the free end of the eccentric trunnion 12 to be compressed until the adjusting organ 14 has reached a position on the eccentric trunnion 12 where the motion limiter 23 coincides with the annular expansion 25 of the gudgeon hole 15. In this situation, the free end of the eccentric trunnion 12 springs to its normal position and the adjusting organ 14 is locked axially on the eccentric trunnion 12. After this, the support organ 9a is pushed onto its pivot 16 and finally the locking piece 19 is inserted into the hollow pivot journal 16, which at this stage is in the boss 18 of the support organ 9a, until it reaches a position where the securing claws 22 are released from compression and lock the support organ 9a and the adjusting organ 14 to each other.

Using the above-described arrangement according to the invention, the point of support of the instrument hose 7 is adjusted e.g. by changing the position of the support organ 9a with respect to the instrument arm 8 by pulling the support organ 9a somewhat laterally outwards, i.e. in the direction of its axis of rotation, to cause the toothing 17 which locks the adjusting organ 14 to be released from its locking stopper 13. The rear surface of the toothing 17 now meets the stop face 21, and the gudgeon hole 15 of the adjusting organ 14 compresses the free end of the eccentric trunnion 12 in the area of the motion limiter 23. When the support organ 9a is pulled outwards, the stop face 21 of the supporting part 11 functions as a barrier fitted to prevent the adjusting organ 14 from moving axially too far outwards. Likewise, the motion limiter 23 has been adapted to prevent accidental outward sliding of the adjusting organ 14.

After the toothing 17 has been pulled clear of the locking stopper 13, the support organ 9a is turned about the eccentric trunnion 12 to a desired attitude and then pushed back inwards, whereupon the toothing 17 of the adjusting organ 14 is again engaged on the locking stopper 13 and the free end of the eccentric trunnion 12 springs to its normal size as the motion limiter 23 enters into the annular expansion 25 at the outer end of the gudgeon hole 15. By rotating the support organ 9a in this way, the position of the point of support of the instrument hose 7 in the bending direction of the instrument arm 8 can be shifted in such manner that the perpendicular distance of the point of support from the longitudinal central axis of the instrument arm changes.

It is obvious to a person skilled in the art that different embodiments of the invention are not exclusively limited to the examples described above, but that they can be varied within the scope of the claims presented below. Thus, for example, the construction and adjustment mechanism of the support organ may differ from those described above. However, the main idea is adjustment of the support of an instrument hose relative to an instrument arm in such manner that the distance of the point of support from the instrument arm varies. An adjustment can also be performed in a transverse direction with respect to the longitudinal central axis of the instrument arm e.g. by using a rack and pinion or linear guide tracks and a separate locking mechanism. The position of the supporting point or support provided by the hose support of the instrument hose may be arranged to be adjustable in relation to the knuckle or fulcrum of the instrument arm. Likewise, the position of the point of support of the instrument hose may be arranged to be adjustable to different distances in relation to the knuckle or fulcrum of the instrument arm.

It is obvious to a person skilled in the art that the structure enabling the bending of the instrument arm may differ from that described above. For example, instead of a bending point essentially at the middle of the arm, the bending point may be located at the base of the instrument arm or the entire arm may be so constructed that it is bendable substantially over its whole length. The instrument arm may also have a knuckle at the bending point, in which case the knuckle point may be located substantially midway between the ends of the instrument arm or at the base of the instrument arm in connection with the console tray. According to a preferred embodiment of the invention, the instrument arm is arranged to be bendable essentially at its midpoint by forming the arm from two substantially rigid arm profiles and a spring structure arranged between them, these arm parts being coated with a substantially flexible material.

## Claims

1. An arrangement for adjusting the bending resistance of a bendable instrument arm (8) provided in connection with a dental care unit, said arrangement comprising an instrument console (5) or a corresponding structure, to which the instrument arm (8) is attached, and a hand instrument (6), which is connected to the dental care unit (1) via an instrument hose (7) and arranged to be placed on the instrument console (5) and supported by said instrument arm (8) in such manner that said instrument hose (7) rests on a hose support (9) arranged in connection with the instrument arm (8), **characterized in that** the position of the hose support (9), or the position of the support provided for the instrument hose (7) by the hose support (9) is arranged to be adjustable relative to the instrument arm (8) or the longitudinal central axis of the instrument arm (8) respectively and the bending resistance is adjusted by varying the distance of the hose support (9) from the instrument arm (8) or of the position of the support provided for the instrument hose (7) by the hose support (9) from the longitudinal central axis of the instrument arm (8).

2. The arrangement according to claim 1, **characterized in that** the hose support (9) is arranged to be adjustable- to positions closer to and farther away from the instrument arm (8) in the direction of the bending or turning movement of the free end of the instrument arm (8).

3. The arrangement according to claim 1 or 2, **characterized in that** the hose support (9) comprises a support organ (9a) forming a support for the instrument hose (7), said instrument hose (7) being arranged to be passed over said support organ,

4. The arrangement according to claim 3, **characterized in that** the support organ (9a) is arranged to be adjustable to positions closer to and farther away from the instrument arm (8) in the direction of the bending or turning movement of the free end of the instrument arm (8).

5. The arrangement according to any one of claims 1-4, **characterized in that** the hose support (9) comprises' an eccentric trunnion (12) fixedly mounted with respect to the instrument arm (8), the support organ (9a) being arranged to be turnable with respect to said trunnion,

6. The arrangement according to claim 5, **characterized in that** the hose support (9) comprises an adjusting organ (14), which is provided with a gudgeon hole (15) fittable onto the aforesaid eccentric trunnion (12) and with a pivot journal (16), the support organ (9a) being arranged to be placed onto said pivot journal (16).

7. The arrangement according to claim 6, **characterized in that** the hose support (9) comprises a locking element (17) arranged in the adjusting organ (14) and provided with a toothing, and a locking stopper (13) arranged on the instrument arm (8) so as to be engageable on the locking element (17), said locking element (13) being arranged to lock the support organ (9a) to keep it unrotatable.

8. The arrangement according to claim 7 , **characterized in that** the support organ (9a) is arranged to be withdrawable out in the direction of its axis of rotation to allow the locking element (17) to be released from its locking stopper (13) and turned about the eccentric trunnion (12) to at least one new position and to be pushed back in the direction of said axis so that the locking element (17) of the adjusting organ (14) meets the locking stopper (13) and the support organ (9a) is locked in the aforesaid at least one new position.

9. The arrangement according to any one of claims 1-8, **characterized in that** the position of the hose support (9) is arranged to be adjustable with respect to a knuckle or fulcrum of the instrument arm (8).

10. The arrangement according to any one of claims 3-9, **characterised in that** the position of the support organ (9a) of the hose support is arranged to be adjustable with respect to the knuckle or fulcrum of the instrument arm (8).

11. The arrangement according to any one of claims 1-10, **characterized in that** the position of the hose support (9), or the position of the support provided for the instrument hose (7) by the hose support (9), is arranged to be adjustable in a different direction relative to the bending or turning direction of the instrument arm (8).

12. The arrangement according to any one of claims 1-11, **characterized in that** the instrument arm (8) is arranged to be bendable essentially at its midpoint.

13. The arrangement according to any one of claims 1-12, **characterized in that** the instrument arm (8) is formed of two substantially rigid arm profiles and a spring structure arranged between these, said arm parts being coated with a flexible material.

## Patentansprüche

1. Anordnung zur Einstellung des Biegewiderstandes eines biegbaren Instrumentenarms (8), welcher in Verbindung mit einer Einheit zur zahnmedizinischen Versorgung bereitgestellt ist, wobei diese Einheit eine Instrumentenkonsole (5) oder eine entsprechende Struktur aufweist, an welcher der Instrumentenarm (8) angebracht ist, und ein Handinstrument (6) aufweist, welches mit der Einheit zur zahnmedizinischen Versorgung (1) über einen Instrumentenschlauch (7) verbunden ist, und dazu ausgelegt ist, auf der Instrumentenkonsole (5) platziert zu werden und von dem Instrumentenarm (8) derart gelagert zu werden, dass der Instrumentenschlauch (7) auf einem Schlauchträger (9) zu liegen kommt, welcher in Verbindung mit dem Instrumentenarm (8) vorgesehen ist, **dadurch gekennzeichnet, dass**
die Position des Schlauchträgers (9) oder die Position der für den Instrumentenschlauch (7) durch den Schlauchträger (9) bereitgestellten Trägerfläche dazu ausgelegt ist, relativ zu dem Instrumentenarm (8) oder der zentralen Longitudinalachse des Instrumentenarms (8) jeweils einstellbar zu sein, und
der Biegewiderstand durch ein Verändern der Distanz des Schlauchträgers (9) von dem Instrumentenarm (8) oder der Position der für den Instrumentenschlauch (7) durch den Schlauchträger (9) bereitgestellten Trägerfläche von der zentralen Longitudinalachse des Instrumentenarms (8) eingestellt wird.

2. Anordnung gemäß Anspruch 1, **dadurch gekennzeichnet, dass** der Schlauchträger (9), dazu ausgelegt ist, auf Positionen einstellbar zu sein, welche näher bei oder weiter weg sind von dem Instrumentenarm (8) in der Richtung der Biege- oder Drehbewegung des freien Endes des Instrumentenarms (8).

3. Anordnung gemäß Anspruch 1 oder 2, **dadurch gekennzeichnet, dass** der Schlauchträger (9) ein Trägerorgan (9a) aufweist, welches eine Trägerfläche für den Instrumentenschlauch (7) ausbildet, wobei der Instrumentenschlauch (7) dazu ausgelegt ist, sich über dieses Trägerorgan zu erstrecken.

4. Anordnung nach Anspruch 3, **dadurch gekennzeichnet, dass** das Trägerorgan (9a) dazu ausgelegt ist, auf Positionen einstellbar zu sein, welche näher bei oder weiter weg sind von dem Instrumentenarm (8) in der Richtung der Biege- oder Drehbewegung des freien Endes des Instrumentenarms (8).

5. Anordnung gemäß einem der Ansprüche 1 bis 4, **dadurch gekennzeichnet, dass** der Schlauchträger (9) einen exzentrischen Zapfen (12) aufweist, welcher mit Bezug auf den Instrumentenarm (8) fest montiert ist, und das Trägerorgan (9a) dazu ausgelegt ist, mit Bezug auf den Zapfen drehbar zu sein.

6. Anordnung gemäß Anspruch 5, **dadurch gekennzeichnet, dass** der Schlauchträger (9) ein Einstellungsorgan (14) aufweist, welches mit einem Zapfenloch (15) ausgestattet ist, welches auf den vorstehend genannten exzentrischen Zapfen (12) passbar ist, und mit einem Drehpunktlagerzapfen (16), wobei das Trägerorgan (9a) dazu ausgelegt ist, auf diesen Drehpunktlagerzapfen (16) platziert zu werden.

7. Anordnung nach Anspruch 6, **dadurch gekennzeichnet, dass** der Schlauchträger (9) ein Verriegelungselement (17) aufweist, welches in dem Einstellungsorgan (14) angeordnet ist und mit einer Verzahnung ausgestattet ist, und mit einem Verriegelungsstopper (13), welcher auf dem Instrumentenarm (8) derart angeordnet ist, dass er in Eingriff mit dem Verriegelungselement (17) gebracht werden kann, wobei das Verriegelungselement (13) dazu ausgelegt ist, das Trägerorgan (9a) zu verriegeln, um es nicht-drehbar zu halten.

8. Anordnung gemäß Anspruch 7, **dadurch gekennzeichnet, dass** das Trägerorgan (9a) dazu ausgelegt ist, in der Richtung seiner Rotationsachse zurückziehbar zu sein, um es zu ermöglichen, dass das Verriegelungselement (17) von seinem Verriegelungsstopper (13) gelöst wird, und um den exzentrischen Zapfen (12) in zumindest eine neue Position gedreht wird und dass es zurückgedrückt wird in der Richtung dieser Achse, sodass das Verriegelungselement (17) des Einstellungsorgans (14) auf den Verriegelungsstopper (13) trifft und das Trägerorgan (9a) in der vorstehend genannten zumindest einen neuen Position fixiert wird.

9. Anordnung gemäß einem der Ansprüche 1 bis 8, **dadurch gekennzeichnet, dass** die Position des Schlauchträgers (9) dazu ausgelegt ist, mit Bezug auf das Gelenk oder den Drehpunkt des Instrumentenarms (8) einstellbar zu sein.

10. Anordnung gemäß einem der Ansprüche 3 bis 9, **dadurch gekennzeichnet, dass** die Position des Trägerorgans (9a) des Schlauchträgers dazu ausgelegt ist, mit Bezug auf das Gelenk oder den Drehpunkt des Instrumentenarms (8) einstellbar zu sein.

11. Anordnung gemäß einem der Ansprüche 1 bis 10, **dadurch gekennzeichnet, dass** die Position des Schlauchträgers (9) oder die Position der für den Instrumentenschlauch (7) durch den Schlauchträger (9) bereitgestellten Trägerfläche derart ausgelegt ist, dass sie relativ zu der Biege- oder Drehrichtung des Instrumentenarms (8) in einer anderen Richtung einstellbar ist.

12. Anordnung gemäß einem der Ansprüche 1 bis 11, **dadurch gekennzeichnet, dass** der Instrumentenarm (8) dazu ausgelegt ist, im Wesentlichen in seinem Mittelpunkt biegbar zu sein.

13. Anordnung gemäß einem der Ansprüche 1 bis 12, **dadurch gekennzeichnet, dass** der Instrumentenarm (8) aus zwei im Wesentlichen steifen Armprofilen und einer zwischen diesen angeordneten Federstruktur ausgebildet ist, wobei diese Armteile mit einem flexiblen Material beschichtet sind.

## Revendications

1. Dispositif de réglage de la résistance à la flexion d'un bras (8) d'instrument flexible raccordé à une unité de soin dentaire, ledit dispositif comprenant une console (5) d'instrument ou une structure correspondante, à laquelle le bras (8) d'instrument est attaché, et un instrument à main (6), qui est raccordé à l'unité de soin dentaire (1) par le biais d'un tuyau flexible (7) d'instrument et conçu pour être placé sur la console (5) d'instrument et porté par ledit bras (8) d'instrument de telle manière que ledit tuyau flexible (7) d'instrument repose sur un support (9) de tuyau flexible agencé en raccordement avec le bras (8) d'instrument, **caractérisé en ce que** la position du support (9) de tuyau flexible, ou la position du support fourni pour le tuyau flexible (7) d'instrument par le support (9) de tuyau flexible est conçue pour être réglable par rapport au bras (8) d'instrument ou à l'axe longitudinal central du bras (8) d'instrument respectivement et la résistance à la flexion est réglée par modification de la distance entre le support (9) de tuyau flexible et le bras (8) d'instrument ou entre la position du support fourni pour le tuyau flexible (7) d'instrument par le porte-tuyau flexible (9) et l'axe longitudinal central du bras (8) d'instrument.

2. Dispositif selon la revendication 1, **caractérisé en ce que** le porte-tuyau flexible (9) est conçu pour être réglable dans des positions plus proches et plus éloignées du bras (8) d'instrument dans la direction du mouvement de flexion ou de rotation de l'extrémité libre du bras (8) d'instrument.

3. Dispositif selon la revendication 1 ou 2, **caractérisé en ce que** le porte-tuyau flexible (9) comprend un organe de support (9a) formant un support pour le tuyau flexible (7) d'instrument, ledit tuyau flexible (7) d'instrument étant conçu pour être passé au-dessus dudit organe de support.

4. Dispositif selon la revendication 3, **caractérisé en ce que** l'organe de support (9a) est conçu pour être réglable dans des positions plus proches et plus éloignées du bras (8) d'instrument dans la direction du mouvement de flexion ou de rotation de l'extrémité libre du bras (8) d'instrument.

5. Dispositif selon l'une quelconque des revendications 1 à 4, **caractérisé en ce que** le porte-tuyau flexible (9) comprend un tourillon excentrique (12) monté fixe par rapport au bras (8) d'instrument, l'organe de support (9a) étant conçu pour pouvoir être amené en rotation par rapport audit tourillon.

6. Dispositif selon la revendication 5, **caractérisé en ce que** le porte-tuyau flexible (9) comprend un organe de réglage (14), qui est pourvu d'un trou pour goujon (15) adaptable sur ledit tourillon excentrique (12) et d'un pivot (16), l'organe de support (9a) étant conçu pour être placé sur ledit pivot (16).

7. Dispositif selon la revendication 6, **caractérisé en ce que** le porte-tuyau flexible (9) comprend un élément de verrouillage (17) agencé dans l'organe de réglage (14) et pourvu d'une denture, et une butée de verrouillage (13) agencée sur le bras (8) d'instrument de manière à pouvoir être en contact sur l'élément de verrouillage (17), ledit élément de verrouillage (13) étant conçu pour verrouiller l'organe de support (9a) afin de l'empêcher de tourner.

8. Dispositif selon la revendication 7, **caractérisé en ce que** l'organe de support (9a) est conçu pour pouvoir être retiré dans la direction de son axe de rotation pour permettre à l'élément de verrouillage (17) d'être libéré de sa butée de verrouillage (13) et amené en rotation autour du tourillon excentrique (12) vers au moins une nouvelle position et pour être repoussé dans la direction dudit axe de sorte que l'élément de verrouillage (17) de l'organe de réglage (14) rejoint la butée de verrouillage (13) et l'organe de support (9a) est verrouillé dans ladite ou lesdites nouvelles positions.

9. Dispositif selon l'une quelconque des revendications 1 à 8, **caractérisé en ce que** la position du porte-tuyau flexible (9) est conçue pour pouvoir être réglée par rapport à une rotule ou à un point d'appui du bras (8) d'instrument.

10. Dispositif selon l'une quelconque des revendications 3 à 9, **caractérisé en ce que** la position de l'organe de support (9a) du porte-tuyau flexible est conçue pour être réglable par rapport à la rotule ou au point d'appui du bras (8) d'instrument.

11. Dispositif selon l'une quelconque des revendications 1 à 10, **caractérisé en ce que** la position du porte-tuyau flexible (9), ou la position du support fourni pour le tuyau flexible (7) d'instrument par le porte-tuyau flexible (9), est conçue pour être réglable dans une direction différente par rapport à la direction de flexion ou de rotation du bras (8) d'instrument.

12. Dispositif selon l'une quelconque des revendications 1 à 11, **caractérisé en ce que** le bras (8) d'instrument est conçu pour pouvoir être fléchi essentiellement en son point central.

13. Dispositif selon l'une quelconque des revendications 1 à 12, **caractérisé en ce que** le bras (8) d'instrument est formé de deux profilés de bras sensiblement rigides et d'une structure de ressort agencée entre ces derniers, lesdites parties de bras étant revêtues d'un matériau flexible.
